# EUROPEAN PATENT SPECIFICATION

(11) **EP 3 495 255 B1**
(45) Date of publication and mention of the grant of the patent: **18.03.2020**
(21) Application number: 18190498.8
(22) Date of filing: 23.08.2018
(51) Int. Cl.: B62M 7/04, B62M 11/06, B62M 25/06, B62K 23/08, F16H 59/02, F16H 63/50

(54) **STRADDLED VEHICLE**
GRÄTSCHSITZFAHRZEUG
VÉHICULE À ENFOURCHER

(30) Priority: 07.12.2017 JP 2017235054
(43) Date of publication of application: 12.06.2019
(73) Proprietor: Yamaha Hatsudoki Kabushiki Kaisha, Shizuoka-ken 438-8501 (JP)
(72) Inventor: KATO, Akikazu, Iwata-shi, Shizuoka-ken, 438-8501 (JP)
(74) Representative: Grünecker Patent- und Rechtsanwälte PartG mbB

(56) References cited:
- EP-A1- 1 923 287
- EP-A2- 2 080 884
- JP-A- 2009 221 964
- JP-A- 2010 120 569
- US-A1- 2006 068 975

## Description

The present invention relates to a straddled vehicle according to the preamble of independent claim 1 capable of adjusting an output of an engine in order to change a gear ratio of a transmission. Such a straddled vehicle can be taken from the prior art document US 2006/068975 A1.

At a race or the like, a quick gear shift is required. Therefore, a rider sometimes carries out a gear shift without performing a clutch operation (hereinafter referred to as clutchless shifting). In this case, because the gear shift is carried out with motive power transmitted from a crankshaft to a main shaft, it is difficult to separate gears. As such, a system for assisting the clutchless shifting has been developed.

For example, in a control system described in JP 2008-144755 A, the load exerted on a shift pedal is detected by a load sensor, A shift operation performed by the rider is detected based on whether a value of the detected load is equal to or larger than a predetermined threshold value. The shift operation is detected, so that output adjustment of the engine is carried out.

In the above-mentioned control system, the shift operation is accurately detected, so that the output adjustment of the engine is appropriately carried out. However, the shift operation may be detected contrary to the rider's intent due to noise or performance of the load sensor.

In order to accurately detect the shift operation, the use of a load sensor that has excellent noise resistance and durability and is capable of detecting a load exerted on a shift pedal with high accuracy is considered. However, such a load sensor is costly.

An object of the present invention is to provide a straddled vehicle that can appropriately carry out output adjustment of an engine for a change of a gear ratio of a transmission by accurately determining whether a shift operation intended by a rider has been performed while preventing an increase in cost.

According to the present invention said object is solved by a straddled vehicle having the features of independent claim 1. Preferred embodiments are laid down in the dependent claims.
(1) A straddled vehicle according to one aspect includes an engine, a drive wheel, a transmission that has a shift cam and transmits a torque generated by the engine to the drive wheel, a shift pedal operable by a rider for a change of a gear ratio of the transmission, a driver that operates when the shift pedal is lifted up or pushed down, a rotation driving member that rotates the shift cam in conjunction with an operation of the driver, a load detector that is provided at the driver and detects a load applied to the driver when the shift pedal is lifted up or pushed down, an angle detector that detects a rotation angle of the shift cam, a load determiner that determines whether a load condition is satisfied, the load condition being that the load detected by the load detector is larger than a load threshold value, an angle determiner that determines whether an angular condition is satisfied, the angular condition being that the rotation angle detected by the angle detector is larger than a predetermined angular threshold value, a shift determiner that determines that a shift operation for a change of a gear ratio of the transmission has been performed when the load condition and the angular condition are satisfied, and determines that the shift operation has not been performed when at least one of the load condition and the angular condition is not satisfied, and a controller that adjusts an output of the engine to change the gear ratio of the transmission when the shift determiner determines that the shift operation has been performed.
   In the straddled vehicle, determination is made whether the load condition is satisfied, the load condition being that the load detected by the load detector when the shift pedal is lifted up or pushed down is larger than the load threshold value. Further, determination is made whether the angular condition is satisfied, the angular condition being that the rotation angle of the shift cam detected by the angle detector is larger than the angular threshold value. When determination is made that the load condition and the angular condition are satisfied, determination is made that the shift operation has been performed. On the other hand, when determination is made that at least one of the load condition and the angular condition is not satisfied, determination is made that the shift operation has not been performed.
   Thus, even in the case where determination is erroneously made that the load condition is satisfied when the shift operation has not been performed, if the angular condition is not satisfied, determination is made that the shift operation has not been performed. Therefore, it is not necessary to prepare a costly load detector that has excellent noise resistance and durability and is capable of detecting a load at high accuracy in order to accurately determine whether the shift operation has been performed.
   Further, even in the case where determination is erroneously made that the angular condition is satisfied when the shift operation has not been performed, if the load condition is not satisfied, determination is made that the shift operation has not been performed. Therefore, it is not necessary to prepare a costly angle detector that has excellent noise resistance and durability and is capable of acquiring angle information at high accuracy in order to accurately determine whether the shift operation has been performed.
   As described above, determination is made whether the operation of the shift pedal intended by the rider has been performed based on the determination whether a load has been applied to the shift pedal and the determination whether the shift cam has been rotated.
   As a result, it is possible to appropriately carry out the output adjustment of the engine for the change of the gear ratio of the transmission by accurately determining whether the shift operation intended by the rider has been performed while preventing an increase in cost.
   When the load threshold value is set to be smaller than the load required for the actual rotation of the shift cam, determination may be made that the load condition is satisfied based on the operation of the shift pedal not intended by the rider. Even in such a case, determination is not made that the angular condition is satisfied unless the rotation driving member rotates by an angle that is larger than the angular threshold value. Therefore, the output adjustment of the engine is prevented from being carried out due to the operation of the shift pedal not intended by the rider.
(2) The load determiner may determine that the load condition is satisfied when an output signal of the load detector indicates that the applied load has been larger than the load threshold value for a predetermined time length.
   In this case, when the output signal of the load detector changes due to noise, determination is prevented from being erroneously made that the load condition is satisfied.
(3) The transmission may further have one or a plurality of shift forks that move in an axis direction of the shift cam according to the rotation angle of the shift cam when the shift cam is rotated, the gear ratio of the transmission may be changed by movement of at least one of the one or plurality of shift forks in the axis direction, the shift cam may be configured to have a play angle at which the one or plurality of shift forks do not move in the axis direction when the shift cam is rotated, and the angular threshold value may be set to an angle other than the play angle.
   In this case, because the angular threshold value is set to an angle other than the play angle, determination can be appropriately made whether the shift operation intended by the rider has been performed based on the angular condition.
(4) The shift pedal may be configured to be lifted up by the rider for an upshift of the transmission, and may be configured to be pushed down by the rider for a downshift of the transmission, and the driver and the rotation driving member may rotate the shift cam in a first rotation direction by an operation of the shift pedal for the upshift, and may rotate the shift cam in a second rotation direction opposite to the first rotation direction by an operation of the shift pedal for the downshift.
   In this case, the rider can carry out the upshift of the transmission by lifting up the shift pedal. At this time, the shift cam rotates in the first rotation direction. Further, the rider can carry out the downshift of the transmission by pushing down the shift pedal. At this time, the shift cam rotates in the second rotation direction.
   In the above-mentioned configuration, the rider can carry out the downshift easily by stamping on the shift pedal during deceleration of the straddled vehicle.
(5) The shift pedal may be configured to be lifted up by the rider for a downshift of the transmission, and may be configured to be pushed down by the rider for an upshift of the transmission, and the driver and the rotation driving member may rotate the shift cam in a first rotation direction by an operation of the shift pedal for the upshift, and may rotate the shift cam in a second rotation direction opposite to the first rotation direction by an operation of the shift pedal for the downshift.
   In this case, the rider can carry out the upshift of the transmission by pushing down the shift pedal. At this time, the shift cam rotates in the first rotation direction. Further, the rider can carry out the downshift of the transmission by lifting up the shift pedal. At this time, the shift cam rotates in the second rotation direction.
   In the above-mentioned configuration, the rider can carry out the upshift easily by stamping on the shift pedal when turning the straddled vehicle,
(6) The straddled vehicle may further include a first state determiner that determines whether the engine is in a driving state where a torque is transmitted from the engine to the drive wheel, the angle determiner may be configured to determine whether the shift cam is rotated in the first rotation direction, and the controller does not have to carry out output adjustment of the engine for a change of the gear ratio of the transmission when the determination is made by the first state determiner that the engine is not in the driving state, and the determination is made by the angle determiner that the shift cam is rotated in the first rotation direction.
   In the above-mentioned configuration, the output adjustment of the engine for the upshift is not carried out when the engine is in the driven state. Thus, a rapid increase in speed of the straddled vehicle with its engine being in the driven state is prevented.
(7) The straddled vehicle may further include a second state determiner that determines whether the engine is in a driven state where a torque is transmitted from the drive wheel to the engine, wherein the angle determiner may be configured to determine whether the shift cam is rotated in the second rotation direction, and the controller does not have to carry out output adjustment of the engine for a change of the gear ratio of the transmission when the determination is made by the second state determiner that the engine is not in the driven state, and the determination is made by the angle determiner that the shift cam is rotated in the second rotation direction.
   In the above-mentioned configuration, the output adjustment of the engine for the downshift is not carried out when the engine is in the driving state. Thus, an occurrence of an abrupt switch from the driving state to the driven state right after the downshift is prevented, whereby application of an excessive load to the transmission is prevented. Therefore, the useful life of the transmission is prolonged.
(8) An absolute value of the load threshold value may be set to a value lower than an absolute value of a detection limit value of the load detector.

In this case, as compared to the case where the absolute value of the load threshold value is set to be equal to the absolute value of the detection limit value of the load detector, determination can be more accurately made whether the load detected by the load detector is larger than the load threshold value.

### BRIEF DESCRIPTION OF THE SEVERAL VIEWS OF THE DRAWING

Fig. 1 is a side view of a motorcycle according to one preferred embodiment;
Fig. 2 is a diagram for explaining a schematic configuration of a transmission and a shift mechanism provided in a mission case of Fig. 1;
Figs. 3(a) and 3(b) are schematic diagrams for explaining a mechanism of transmission of a torque that has been transmitted to a main shaft to a drive shaft;
Fig. 4 is a left side view of the motorcycle showing a first link mechanism, a shift pedal and their peripheral members of Fig. 1;
Fig. 5 is a diagram showing one example of output signals of a load sensor and a shift cam sensor during a shift operation;
Figs. 6(a) to 6(c) are diagrams showing a relationship between a dog hole of a fixed gear and a dog of a slide gear in a transmission;
Fig. 7 is a diagram showing one example of driving state determination data stored in an ECU;
Fig. 8 is a diagram showing a schematic configuration of an engine and its peripheral members, and a control system of the motorcycle; and
Fig. 9 is a flow chart showing one example of a control operation in the ECU.

### DESCRIPTION OF THE PREFERRED EMBODIMENTS

A straddled vehicle according to one preferred embodiment will be described below with reference to drawings. In the following description, a motorcycle will be described as one example of the straddled vehicle.

### [1] Schematic Configuration of Motorcycle

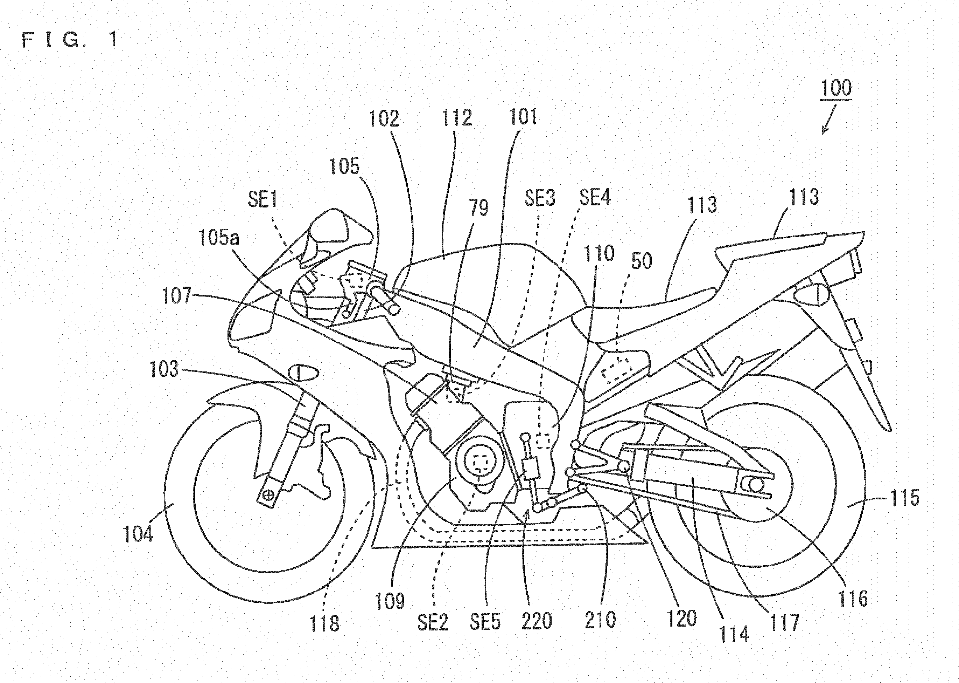

Fig. 1 is a side view of the motorcycle according to the one preferred embodiment. In the motorcycle 100 of Fig. 1, a head pipe 102 is provided at a front end of a body frame 101. A front fork 103 is provided at the head pipe 102 to be swingable in a left-and-right direction. A front wheel 104 is supported at a lower end of the front fork 103 to be rotatable. A handle 105 is provided at an upper end of the head pipe 102.

A clutch lever 105a, an accelerator grip (not shown) and an accelerator sensor SE1 are provided at the handle 105. The accelerator sensor SE1 detects an amount of operation of the accelerator grip (hereinafter referred to as an accelerator opening) by a rider. A clutch sensor (not shown) that detects an amount of operation of the clutch lever 105a by the rider is further provided at the handle 105.

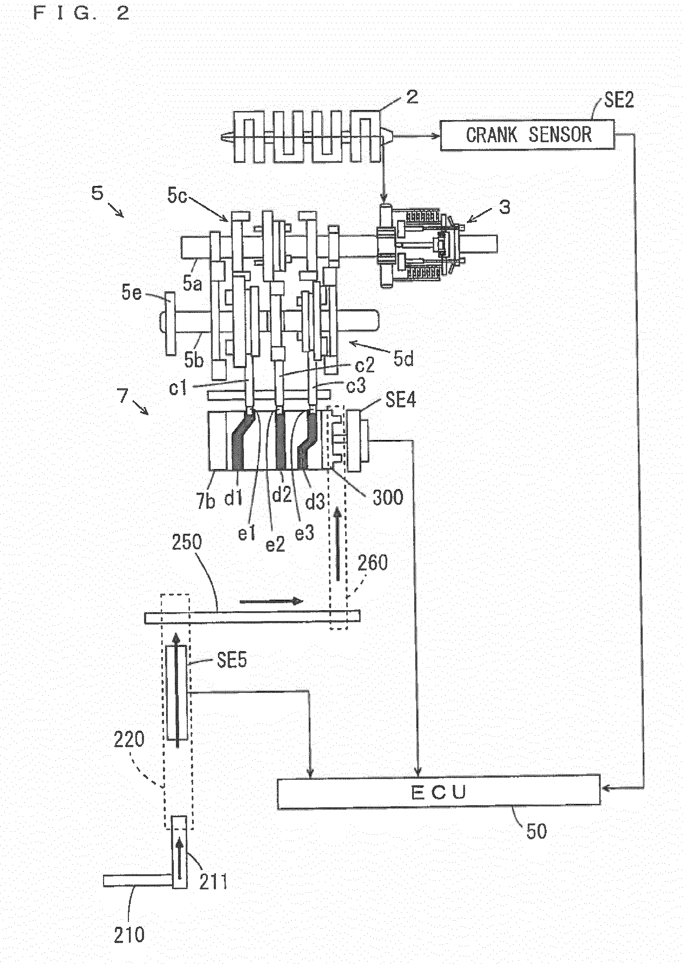

As shown in Fig. 1, the body frame 101 supports an engine 107. An intake pipe 79 and an exhaust pipe 118 are attached to the engine 107. A crankcase 109 is provided at a lower portion of the engine 107. A crank sensor SE2 is provided in the crankcase 109. The crank sensor SE2 detects a rotation angle of a crankshaft 2 (Fig. 2) of the engine 107.

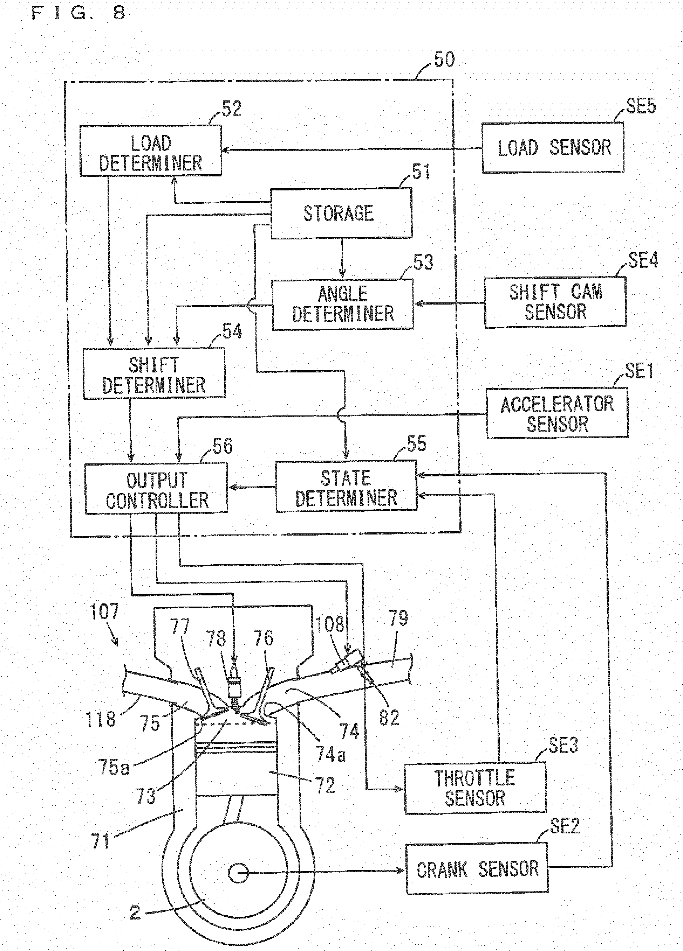

Further, a throttle sensor SE3 is provided in the intake pipe 79. The throttle sensor SE3 detects a degree of opening of an ETV (Electronic Throttle Valve) 82 (Fig. 8), described below.

A mission case 110 is attached to a rear portion of the crankcase 109. A shift cam sensor SE4, a below-mentioned transmission 5 (Fig. 2) and a below-mentioned shift mechanism 7 (Fig. 2) are provided in the mission case 110. The shift cam sensor SE4 detects a rotation angle of a below-mentioned shift cam 7b (Fig. 2).

A shift pedal 210 is provided at a side portion of the mission case 110. The shift pedal 210 is integrally attached to a below-mentioned pedal arm 211 (Fig. 2). A back step 120 is provided at a position farther rearward than the shift pedal 210. The back step 120 is supported by the body frame 101.

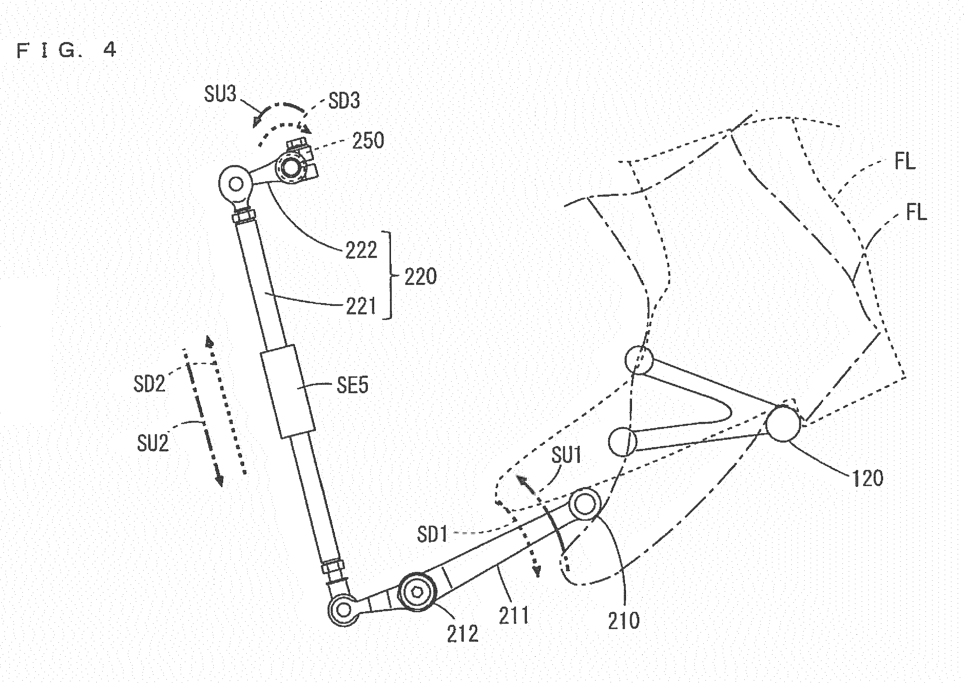

Further, a first link mechanism 220 is provided at a side portion of the mission case 110. A load sensor SE5 is provided at the first link mechanism 220. The rider operates the shift pedal 210 by applying a load to the shift pedal 210. When the rider operates the shift pedal 210, the load sensor SE5 detects the load applied to a first link shaft 221 (Fig. 4), described below.

A fuel tank 112 is provided above the engine 107. Two seats 113 are provided to be arranged in a front-and-rear direction at positions farther rearward than the fuel tank 112. An ECU (Electronic Control Unit) 50 is provided below a front seat 113.

An ECU 50 includes a CPU (Central Processing Unit), a ROM (Read Only Memory) and a RAM (Random Access Memory). The ROM is made of a non-volatile memory, for example, and stores a system program, a control program of the CPU and the like. The RAM is made of a volatile memory, for example, is used as a work area of the CPU, and stores various data temporarily. The CPU executes the control program stored in the ROM to implement various functions. Details of various functions implemented by the CPU will be described below.

A rear arm 114 is connected to the body frame 101 to extend to a position farther rearward than the engine 107. The rear arm 114 rotatably supports a rear wheel 115 and a rear wheel driven sprocket 116. A chain 117 is wound around the rear wheel driven sprocket 116 and a below-mentioned rear wheel drive sprocket 5e (Fig. 2).

### [2] Transmission and Shift Mechanism

Fig. 2 is a diagram for explaining schematic configurations of the transmission 5 and the shift mechanism 7 provided in the mission case 110 of Fig. 1. As shown in Fig. 2, the transmission 5 includes a main shaft 5a and a drive shaft 5b. The main shaft 5a is connected to a clutch 3. A plurality of gears 5c are attached to the main shaft 5a, and a plurality of gears 5d and a rear wheel drive sprocket 5e are attached to the drive shaft 5b.

For example, the torque of the crankshaft 2 generated by the engine 107 of Fig. 1 is transmitted to the clutch 3. When the clutch 3 is in a connected state, the torque that has been transmitted to the clutch 3 is transmitted to the main shaft 5a of the transmission 5. The torque that has been transmitted to the main shaft 5a is transmitted to the drive shaft 5b via the gears 5c, 5d. The torque that has been transmitted to the drive shaft 5b is transmitted to the rear wheel 115 (Fig. 1) via the rear wheel drive sprocket 5e, the chain 117 (Fig. 1) and the rear wheel driven sprocket 116 (Fig. 1). Thus, the rear wheel 115 is rotated. During an operation of the engine 107, the rotation angle of the crankshaft 2 detected by the crank sensor SE2 is output to the ECU 50.

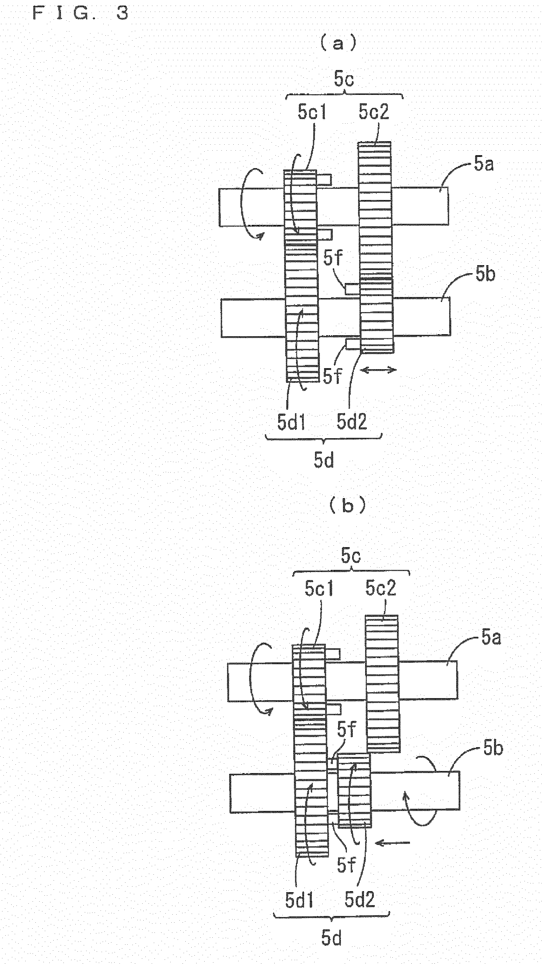

Figs. 3(a) and 3(b) are schematic diagrams for explaining the mechanism of transmission of the torque, that has been transmitted to the main shaft 5a, to the drive shaft 5b. Figs. 3(a) and 3(b) show two gears 5c1, 5c2 out of the plurality of gears 5c and two gears 5d1, 5d2 out of the plurality of gears 5d.

While being movable in an axial direction of the main shaft 5a, the gear 5c1 is fixed to the main shaft 5a in a rotation direction of the main shaft 5a. The gear 5c2 is rotatably attached to the main shaft 5a while being prevented from moving in the axial direction of the main shaft 5a.

The gear 5d1 is rotatably attached to the drive shaft 5b while being prevented from moving in an axial direction of the drive shaft 5b. In the case where the gear 5c1 and the gear 5d1 are engaged, the gear 5d1 is rotated by the rotation of the main shaft 5a.

While being movable in the axial direction of the drive shaft 5b, the gear 5d2 is fixed to the drive shaft 5b in the rotation direction of the drive shaft 5b. Therefore, the drive shaft 5b rotates when the gear 5d2 rotates.

As shown in Fig. 3(a), when the gear 5d2 is separated from the gear 5d1, the gear 5d1 is not fixed to the drive shaft 5b in the rotation direction of the drive shaft 5b. In this case, when the main shaft 5a rotates, the gear 5d1 rotates in conjunction with the rotation of the main shaft 5a. However, the drive shaft 5b rotates not in conjunction with the rotation of the main shaft 5a or stops. That is, the transmission 5 does not transmit a torque between the engine 107 and the rear wheel 115.

On the other hand, as shown in Fig. 3(b), the gear 5d2 moves in the axial direction to become closer to the gear 5d1. Thus, when convex-shape dogs 5f provided on a side surface of the gear 5d2 are fitted into recess-shape dog holes (not shown) provided in a side surface of the gear 5d1, the gear 5d1 and the gear 5d2 are fixed. In this case, when the main shaft 5a rotates, the gear 5d2 rotates together with the gear 5d1 in conjunction with the rotation of the main shaft 5a. Thus, the drive shaft 5b rotates together with the gear 5d2 in conjunction with the rotation of the main shaft 5a.

In the case where the plurality of gears are in a state shown in Fig. 3(a), then the gear 5c1 is brought closer to the gear 5c2, and the gear 5c1 and the gear 5c2 are fixed, the gear 5c2 rotates together with the gear 5c1. In this case, the gear 5d2 rotates in conjunction with the rotation of the main shaft 5a and the gear 5c2. Thus, the drive shaft 5b rotates together with the gear 5d2 in conjunction with the rotation of the main shaft 5a. Hereinafter, a gear that moves on the main shaft 5a or the drive shaft 5b in the axial direction similarly to the gears 5c1, 5d2 is referred to as a slide gear. Further, a gear that is prevented from moving in the axial direction of the main shaft 5a or the drive shaft 5b similarly to the gears 5c2, 5d1 is referred to as a fixed gear.

In this manner, in the transmission 5, one or a plurality of slide gears are moved, and a combination of one or a plurality of slide gears and one or a plurality of fixed gears is changed. Thus, the transmission path of a torque from the main shaft 5a to the drive shaft 5b can be changed. Thus, the rotation speed of the drive shaft 5b can be changed relative to the rotation speed of the main shaft 5a.

In the transmission 5, the shift mechanism 7 of Fig. 2 is used in order to move the one or plurality of slide gears. As shown in Fig. 2, the shift mechanism 7 includes the shift pedal 210, the pedal arm 211, the first link mechanism 220, a shift shaft 250, a second link mechanism 260, a stopper plate 300, the shift cam 7b and shift forks c1 to c3.

As described below, the rider pushes down or lifts up the shift pedal 210. In this case, as indicated by thick arrows in Fig. 2, the load applied to the shift pedal 210 is transmitted to the shift shaft 250 via the pedal arm 211 and the first link mechanism 220. Thus, the shift shaft 250 rotates. Further, the torque generated in the shift shaft 250 is transmitted to the shift cam 7b via the second link mechanism 260. Thus, the shift cam 7b is rotated.

Cam grooves d1 to d3 are formed in the shift cam 7b. The shift forks c1 to c3 are coupled to the cam grooves d1 to d3 by slide pins e1 to e3, respectively. The stopper plate 300 is attached to one end of the shift cam 7b. Further, the shift cam sensor SE4 is provided in the vicinity of one end of the shift cam 7b to be in close proximity to the stopper plate 300. During the operation of the engine 107, the rotation angle of the shift cam 7b detected by the shift cam sensor SE4 is output to the ECU 50.

When the shift cam 7b rotates by the operation of the shift pedal 210 by the rider, the slide pins e1 to e3 coupled to the shift forks c1 to c3 move in the cam grooves d1 to d3. In this case, any one of the shift forks c1 to c3 is moved in the axial direction of the shift cam 7b, and the one or plurality of slide gears are moved.

The transmission 5 of the present example has a neutral position and first to sixth gear positions. When the shift cam 7b (Fig. 2) rotates in one direction (hereinafter referred to as a first rotation direction), the gear position of the transmission 5 is sequentially switched to the first, second, third, fourth, fifth and sixth gear positions. Thus, a gear ratio of the transmission 5 sequentially increases (an upshift). On the other hand, when the shift cam 7b (Fig. 2) rotates in the direction opposite to the first rotation direction (hereinafter referred to as a second rotation direction), the gear position of the transmission 5 is sequentially switched to the sixth, fifth, fourth, third, second and first gear positions. Thus, the gear ratio of the transmission 5 sequentially decreases (a downshift).

Here, the rider sometimes operates the shift pedal 210 with the intent of so-called clutchless shifting, that is, the change of the gear ratio of the transmission 5 without an operation of the clutch lever 105a of Fig. 1. In the following description, the operation of the shift pedal 210 by the rider who has the intent of changing the gear ratio of the transmission 5 is referred to as a shift operation. In the present embodiment, whether the shift operation has been performed is determined based on output signals from the load sensor SE5 and the shift cam sensor SE4 of Fig. 2. Details of a method of determining whether the shift operation has been performed will be described below. When the shift operation is performed without the operation of the clutch lever 105a, the output adjustment of the engine 107 for changing the gear ratio of the transmission 5 is suitably carried out.

Whether the shift operation has been performed is determined when the clutch 3 is in the connected state. Whether the clutch 3 is in the connected state can be determined based on whether a detection value of the above-mentioned clutch sensor is larger than a predetermined value, for example.

### [3] Operation Example of Shift Pedal by Rider and Detection of Load by Load Sensor

Fig. 4 is a left side view of the motorcycle 100 showing the first link mechanism 220 and the shift pedal 210 of Fig. 1, and their peripheral members. As shown in Fig. 4, in the left side view of the motorcycle 100, the pedal arm 211 is provided to extend in the front-and-rear direction. The shift pedal 210 is attached to the rear end of the pedal arm 211.

An attachment portion 212 is provided at a portion that is slightly closer to the front end than the center portion of the pedal arm 211. The attachment portion 212 of the pedal arm 211 is supported at a support shaft (not shown) extending horizontally leftward from the body frame 101 (Fig. 1) to be rotatable.

The shift shaft 250 is arranged above the pedal arm 211. The first link mechanism 220 is provided to connect the pedal arm 211 to the shift shaft 250. Specifically, the first link mechanism 220 includes the first link shaft 221 and a second link shaft 222. One end of the second link shaft 222 is fixed to the shift shaft 250 such that the second link shaft 222 is rotatable together with the shift shaft 250 and extends forward of the vehicle from the shift shaft 250. One end of the first link shaft 221 is connected to the front end of the pedal arm 211 to be rotatable. The other end of the first link shaft 221 is connected to the other end of the second link shaft 222 to be rotatable.

The load sensor SE5 is provided at the substantially center portion of the first link shaft 221. The load sensor SE5 is made of an elastic type (a strain gauge type, an electrostatic capacitance type and the like) or a magnetostriction-type load cell, for example, and is configured to be able to detect a tensile load and a compressive load that are applied to the first link shaft 221.

While placing his or her left foot on the back step 120, the rider operates the shift pedal 210 by pushing down or lifting up the shift pedal 210 with the back step 120 as a supporting point.

A return-type transmission method is employed in the shift mechanism 7 of Fig. 2. In the shift mechanism 7, when the shift pedal 210 is lifted up, an operation for the upshift from the first position to the sixth position is performed. Further, when the shift pedal 210 is pushed down, the operation for switching the gear position from the neutral position to the first position or the operation for the downshift from the sixth to first position is performed.

Here, as indicated by a thick one-dot and dash arrow SU1 in Fig. 4, when the shift pedal 210 is lifted up by the rider's left foot FL, the pedal arm 211 rotates in a counterclockwise direction. Thus, as indicated by a thick one-dot and dash arrow SU2, one end (lower end) of the first link shaft 221 is pulled downward. Further, as indicated by a thick one-dot and dash arrow SU3, the second link shaft 222 rotates about the shift shaft 250 in the counterclockwise direction. At this time, a tensile load is applied to the first link shaft 221. The tensile load is detected by the load sensor SE5 and output to the ECU 50 of Fig. 2. In the load sensor SE5, a detection value (voltage value) of the tensile load is 0 or a positive value.

On the other hand, as indicated by a thick dotted arrow SD1 in Fig. 4, when the shift pedal 210 is pushed down by the rider's left foot FL, the pedal arm 211 rotates in a clockwise direction. Thus, as indicated by a thick dotted arrow SD2, one end (lower end) of the first link shaft 221 is lifted up, Further, as indicated by a thick dotted arrow SD3, the second link shaft 222 rotates about the shift shaft 250 in the clockwise direction. At this time, a compressive load is applied to the first link shaft 221. The compressive load is detected by the load sensor SE5 and output to the ECU 50 of Fig. 2. In the load sensor SE5, a detection value (voltage value) of the compressive load is 0 or a negative value.

### [4] Method of Determining Whether Shift Operation Has Been Performed

In the ECU 50 of Fig. 2, a predetermined load threshold value is set for a load to be detected by the load sensor SE5. Further, in the ECU 50, a predetermined angular threshold value is set for a rotation angle to be detected by the shift cam sensor SE4.

During an operation of the engine 107, determination is made whether a load condition is satisfied, the load condition being that the load detected by the load sensor SE5 of Fig. 2 is larger than the load threshold value. Further, determination is made whether an angular condition is satisfied, the angular condition being that the rotation angle detected by the shift cam sensor SE4 of Fig. 2 is larger than the angular threshold value. With the above-mentioned determination made, when the load condition and the angular condition are satisfied, determination is made that the shift operation has been performed. On the other hand, when at least one of the load condition and the angular condition is not satisfied, determination is made that the shift operation has not been performed.

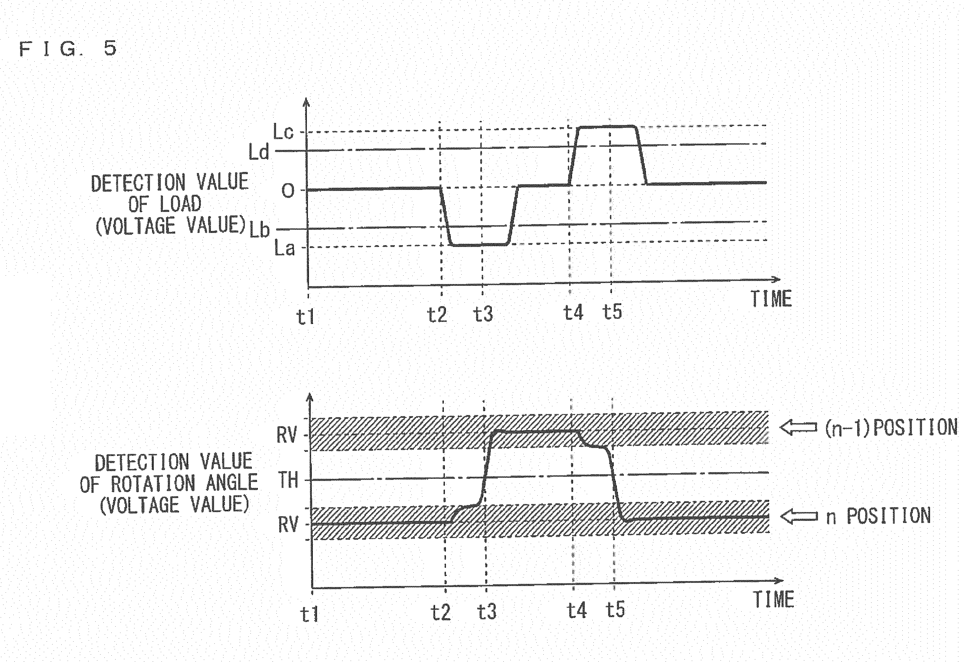

Fig. 5 shows diagrams showing one example of output signals of the load sensor SE5 and the shift cam sensor SE4 during the shift operation. One example of the output signal of the load sensor SE5 is shown in the upper part of Fig. 5. In the graph, the ordinate indicates the detection value (voltage value) of a load, and the abscissa indicates the time.

The above-mentioned detection value of the load sensor SE5 is a positive value or a negative value according to the type (a tensile load or a compressive load) of a load applied to the first link shaft 221. Therefore, in the present embodiment, the load threshold values respectively corresponding to the tensile load and the compressive load are set. In the example of Fig. 5, as for the detection value of a compressive load, a compressive load threshold value Lb that is lower than 0 and higher than a lower limit detection value La is set. Further, as for the detection value of a tensile load, a tensile load threshold value Ld that is higher than 0 and lower than an upper limit detection value Lc is set.

One example of an output signal of the shift cam sensor SE4 is shown in the lower part of Fig. 5. In the graph, the ordinate indicates the detection value (voltage value) of a rotation angle, and the abscissa indicates the time. The output signal of the shift cam sensor SE4 is high when the gear position of the transmission 5 is in a low-speed position, and is low when the gear position of the transmission 5 is in a high-speed position. A plurality of reference angular values RV are set to respectively correspond to the plurality of gear positions of the transmission 5. Further, as indicated by hatching, a play angular range is set with each reference angular value RV as a median value. The play angular range corresponds to the range of the rotation angle by which the shift cam 7b rotates without causing any of the shift forks c1 to c3 (Fig. 2) to move in the axis direction of the shift cam 7b. Further, in the present example, an angular threshold value TH is set within a range between two reference angular values RV and not in the play angular range for each set of the two reference angular values RV, the two reference angular values RV corresponding to the gear positions that are consecutive in the numerical order. In the example of Fig. 5, with 'n' used as an integer that is equal to or larger than 2, and equal to or smaller than 6, parts (two) of the plurality of gear positions are indicated by an n position and an (n-1) position.

The gear position of the transmission 5 is set to the n position at a time point t1 in an initial state. Thereafter, when a shift operation for a downshift from the n position to the (n-1) position is performed at a time point t2, the detection value of a load is lowered from 0 due to the application of a compressive load to the first link shaft 221. In this case, when the detection value of the load becomes lower than the compressive load threshold value Lb that is a negative value, determination is made that the load condition is satisfied. That is, when the detection value (absolute value) of the load exceeds the compressive load threshold value Lb (absolute value), determination is made that the load condition is satisfied. On the other hand, right after the shift operation is started, the detection value of the rotation angle gently increases within the play angular range from the reference angular value RV of the n position. Thereafter, the detection value of the rotation angle falls outside of the play angular range, thereby increasing at a relatively high rate. In this case, when the detection value of the rotation angle becomes higher than the angular threshold value TH that is set between the two reference angular values RV respectively corresponding to the n position and the (n-1) position, determination is made that the angular condition is satisfied. That is, when the detection value of the rotation angle increases from a reference angular value RV corresponding to any gear position and exceeds the angular threshold value TH corresponding to the reference angular value RV, determination is made that the angular condition is satisfied. The load condition and the angular condition are satisfied at a time point t3, whereby determination is made that the shift operation for the downshift has been performed. In this case, the output adjustment of the engine 107 is carried out according to the below-mentioned state of the engine 107. Thus, the gear position of the transmission 5 smoothly changes from the n position to the (n-1) position.

When the shift operation for the downshift ends, the detection value of the load becomes 0. Further, the gear position changes to the (n-1) position, so that the detection value of the rotation angle is maintained at the reference angular value RV corresponding to the (n-1) position.

Then, when the shift operation for the upshift from the (n-1) position to the n position is performed at a time point t4, the detection value of the load increases from 0 due to the application of a tensile load to the first link shaft 221. In this case, when the detection value of the load becomes higher than the tensile load threshold value Ld that is a positive value, determination is made that the load condition is satisfied. That is, when the detection value (absolute value) of the load exceeds the tensile load threshold value Ld (absolute value), determination is made that the load condition is satisfied. On the other hand, right after the shift operation is started, the detection value of the rotation angle gently decreases within the play angular range from the reference angular value RV of the (n-1) position. Thereafter, the detection value of the rotation angle falls out of the play angular range, thereby decreasing at a relatively high rate. In this case, when the detection value of the rotation angle becomes lower than the angular threshold value TH that is set between the two reference angular values RV respectively corresponding to the n position and the (n-1) position, determination is made that the angular condition is satisfied. That is, when the detection value of the rotation angle changes from a reference angular value RV corresponding to any gear position and exceeds the angular threshold value TH corresponding to the reference angular value RV, determination is made that the angular condition is satisfied. The load condition and the angular condition are satisfied at a time point t5, whereby determination is made that the shift operation for the upshift has been performed. In this case, the output adjustment of the engine 107 is carried out according to the below-mentioned state of the engine 107. Thus, the gear position of the transmission 5 smoothly changes from the (n-1) position to the n position.

When the shift operation for the upshift ends, the detection value of the load becomes 0. Further, when the gear position changes to the n position, the detection value of the rotation angle is maintained at the reference angular value RV corresponding to the n position.

An output signal of the load sensor SE5 is sometimes interrupted due to noise or the like. Therefore, in the case where the detection value (absolute value) of the load has been larger than the load threshold value (absolute value) for a predetermined time length, determination may be made that the load condition is satisfied. Thus, erroneous determination whether the load condition is satisfied is prevented.

Further, an output signal of the shift cam sensor SE4 is sometimes interrupted due to noise or the like. Therefore, in the case where the detection value of the shift cam sensor SE4 has been larger than the angular threshold value for a predetermined time length, determination may be made that the angular condition is satisfied. Thus, erroneous determination whether the angular condition is satisfied is prevented.

### [5] State of Engine 107

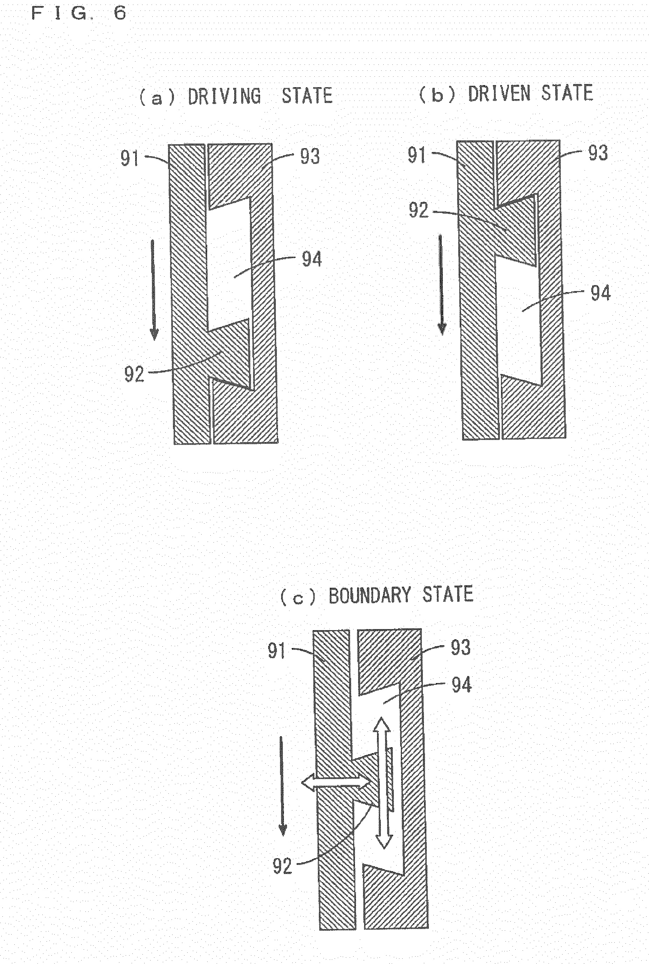

Here, the state of the engine 107 in operation will be described together with the relationship between a dog hole of the fixed gear and a dog of the slide gear in the transmission 5. The relationship between the dog holes of the fixed gear and the dogs of the slide gear in the transmission 5 changes according to the state of the engine 107. Figs. 6(a) to 6(c) are diagrams showing the relationship between the dog hole of the fixed gear and the dog of the slide gear in the transmission 5. Figs. 6(a) to 6(c) show schematic cross sectional views of a portion where a dog 92 is formed in the slide gear 91 and a portion where a dog hole 94 is formed in the fixed gear 93. The slide gear 91 and the fixed gear 93 of the present example correspond to the gear 5c1 and the gear 5c2 of Fig. 3, respectively. Further, the portions of the slide gear 91 and the fixed gear 93 shown in Figs. 6(a) to 6(c) move (rotate) in the direction indicated by thick arrows. Further, the clutch 3 of Fig. 2 is in the connected state.

When the motorcycle 100 is accelerated and traveling on an up-hill slope, for example, a torque of the crankshaft 2 (Fig. 3) is transmitted to the drive shaft 5b (Fig. 3). Specifically, the torque transmitted from the crankshaft 2 to the slide gear 91 via the main shaft 5a is further transmitted to the fixed gear 93 and the drive shaft 5b by the dog 92. In this case, as shown in Fig. 6(a), a front side surface of the dog 92 in the moving direction thereof abuts against a front side surface of the dog hole 94 in the moving direction thereof, and a large engaging force is generated between the dog 92 and the dog hole 94. In this manner, the state where a torque is transmitted to the rear wheel 115 via the transmission 5 from the crankshaft 2 is referred to as a driving state of the engine 107.

On the other hand, when the motorcycle 100 is decelerated with no use of a brake on a down-hill slope, for example, a torque of the drive shaft 5b is transmitted to the crankshaft 2. Specifically, the torque transmitted from the drive shaft 5b to the fixed gear 93 is further transmitted to the slide gear 91 and the main shaft 5a by the dog 92. In this case, as shown in Fig. 6(b), a rear side surface of the dog 92 in the moving direction thereof abuts against a rear side surface of the dog hole 94 in the moving direction thereof, and a large engaging force is generated between the dog 92 and the dog hole 94. In this manner, the state where a torque is transmitted from the rear wheel 115 to the crankshaft 2 via the transmission 5 is referred to as a driven state. The driven state of the engine 107 is the state of the engine 107 where so-called engine braking is in operation.

When the state of the engine 107 is not either the driving state or the driven state, a torque is hardly transmitted between the crankshaft 2 and the drive shaft 5b. In this case, the rotation speed of the dog 92 and the rotation speed of the dog hole 94 are substantially equal to each other, so that a large engaging force is not generated between the dog 92 and the dog hole 94. Thus, as indicated by outlined arrows in Fig. 6(c), the dog 92 is movable in the rotation direction and the axial direction of the main shaft 5a with respect to the dog hole 94. In this manner, the state where a torque is not transmitted between the crankshaft 2 and the rear wheel 115 is referred to as a boundary state of the engine 107. The output adjustment of the engine 107 is carried out to put the engine 107 being in the driving state or the driven state in the boundary state.

### [6] Method of Determining State of Engine 107

In the motorcycle 100 according to the present embodiment, whether the output adjustment of the engine 107 is carried out is determined according to a combination of the type of the shift operation and the state of the engine 107.

Specifically, in the case where the shift operation for the downshift is performed, the output adjustment of the engine 107 for the downshift is carried out when the engine 107 is in the driven state, and is not carried out when the engine 107 is in the driving state or the boundary state. Because the output adjustment is not carried out when the engine 107 is in the driving state, an occurrence of an abrupt switch from the driving state to the driven state right after the downshift is reduced. Thus, application of an excessive load to the transmission 5 is reduced. Therefore, the useful life of the transmission 5 is prolonged. Further, in the case where the engine 107 is in the boundary state at a time point at which the shift operation is performed, the rider is likely to be adjusting the accelerator opening with the intent of the clutchless shifting. Thus, the output adjustment is not carried out when the engine 107 is in the boundary state, whereby the gear ratio can be changed by skill of the rider.

Further, in the case where the shift operation for the upshift is performed, the output adjustment of the engine 107 for the upshift is carried out when the engine 107 is in the driving state, and is not performed when the engine 107 is in the driven state or the boundary state. The output adjustment is not carried out when the engine 107 is in the driven state, whereby an abrupt increase in speed of the motorcycle 100 is prevented when the engine 107 is in the driven state. Further, the output adjustment is not carried out when the engine 107 is in the boundary state, whereby the gear ratio can be changed by the skill of the rider.

As such, in the ECU 50 of Fig. 2, determination is made whether the shift operation has been performed as described above is determined, and which state out of the driving state, the boundary state and the driven state the engine 107 is in. Specifically, which state out of the driving state, the boundary state and the driven state the engine 107 is in is determined based on the data (hereinafter referred to as driving state determination data) indicating the relationship between the rotation speed of the engine 107 when no load is applied, and a throttle opening of an ETV 82 (Fig. 8), described below.

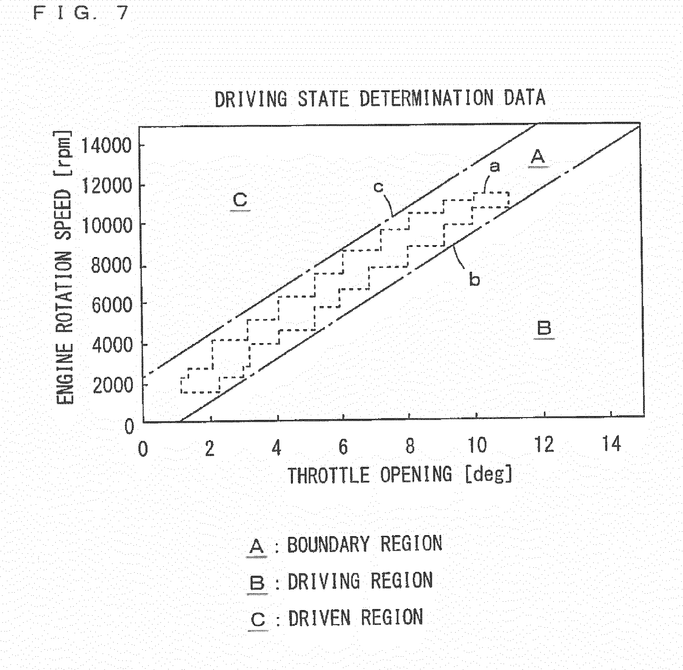

Fig. 7 is a diagram showing one example of the driving state determination data stored in the ECU 50. In Fig. 7, the ordinate indicates the rotation speed of the engine 107, and the abscissa indicates the throttle opening of the ETV 82.

In Fig. 7, a dotted line 'a' indicates the relationship between the rotation speed of the engine 107 and the throttle opening when the transmission 5 does not transmit a torque because the gears 5c, 5d (Fig. 2) are not engaged. As shown in Fig. 7, when the transmission 5 is not transmitting a torque, the relationship between the rotation speed of the engine 107 and the throttle opening forms a histerisis loop. The relationship indicated by the dotted line 'a' can be derived from an experiment or simulation using a computer, for example.

In the present embodiment, a strip-shape region located at a position farther inward than two straight lines that are in parallel to each other and abut against the dotted line 'a' (the region between a one-dot and dash line b and a one dot-and dash line c) is defined as a boundary region A, the region located below the one-dot and dash line b is defined as a driving region B, and the region located above the one-dot and dash line c is defined as a driven region C.

When the state of the engine 107 is determined, the rotation speed of the engine 107 is calculated based on a detection value of the crank sensor SE2. Which region out of the above-mentioned three regions the relationship between the engine 107 and the throttle opening is included is determined based on the calculated rotation speed and the detection value of the throttle sensor SE3. Thus, which state out of the driving state, the boundary state and the driven state the engine 107 is in is determined.

For example, the state where the rotation speed of the engine 107 is 6000 rpm and the throttle opening is 12 deg is included in the driving state B. In this case, it is determined that the engine 107 is in the driving state. Further, the state where the rotation speed of the engine 107 is 6000 rpm and the throttle opening is 2 deg is included in the driven region C. In this case, it is determined that the engine 107 is in the driven state. Further, the state where the rotation speed of the engine 107 is 6000 rpm and the throttle opening is 6 deg is included in the boundary region A. In this case, it is determined that the engine 107 is in the boundary state.

### [7] Engine 107 and Its Peripheral Members, and Control System of Motorcycle 100

Fig. 8 is a diagram showing a schematic configuration of the engine 107 and its peripheral members, and the control system of the motorcycle 100. As shown in Fig. 8, the engine 107 has a cylinder 71, and a piston 72 is provided in the cylinder 71 to be reciprocatable. Further, a combustion chamber 73 is formed in an upper portion of the cylinder 71. The combustion chamber 73 communicates with the outside of the engine 107 through an intake port 74 and an exhaust port 75.

An intake valve 76 is provided at an opening end 74a positioned in the downstream of the intake port 74 to be openable and closeable, and an exhaust valve 77 is provided at an opening end 75a positioned in the upstream of the exhaust port 75 to be openable and closeable. The intake valve 76 and the exhaust valve 77 are driven by a normal cam mechanism. An ignition plug 78 is provided in an upper portion of the combustion chamber 73.

The intake pipe 79 is attached to the engine 107 to be connected to the intake port 74, and the exhaust pipe 118 is attached to the engine 107 to be connected to the exhaust port 75. An injector 108 for supplying fuel into the cylinder 71 is provided in the intake pipe 79. Further, the ETV 82 is provided in the intake pipe 79.

When the engine 107 is in operation, air is taken into the combustion chamber 73 from the intake port 74 through the intake pipe 79, and the fuel is supplied into the combustion chamber 73 by the injector 108. Thus, a fuel-air mixture is generated in the combustion chamber 73, and spark ignition of the fuel-air mixture is carried out by the ignition plug 78. The burned gas generated by the combustion of the fuel-air mixture in the combustion chamber 73 is exhausted from the exhaust port 75 through the exhaust pipe 118.

In the ECU 50, the CPU executes the control program stored in the ROM as described above. Thus, functions of a storage 51, a load determiner 52, an angle determiner 53, a shift determiner 54, a state determiner 55 and an output controller 56 are implemented. Part or all of the configurations of each function implemented in the ECU 50 may be implemented by hardware such as electronic circuits.

The storage 51 is constituted by part of storage regions of the ROM and the RAM, for example, and stores the detection lower limit value La, the compressive load threshold value Lb, the detection upper limit value Lc and the tensile load threshold value Ld. Further, the storage 51 stores the plurality of reference angular values RV, the plurality of play angular ranges and the plurality of angular threshold values TH. The storage 51 further stores the above-mentioned driving state determination data.

Further, the storage 51 stores a predetermined correspondence relationship (hereinafter referred to as an operation correspondence relationship) among the direction in which the shift pedal 210 is operated (hereinafter referred to as a pedal operation direction), the direction in which the shift cam 7b rotates (hereinafter referred to as a cam rotation direction) and the direction of change of the gear position (upshift or downshift). In the operation correspondence relationship of the present example, the direction in which the shift pedal 210 is lifted up and the first rotation direction of the shift cam 7b correspond to the upshift, and the direction in which the shift pedal 210 is pushed down and the second rotation direction of the shift cam 7b correspond to the downshift.

The load determiner 52 determines whether the load condition is satisfied based on an output signal from the load sensor SE5, the load condition being that the detection value of the load is larger than the load threshold value (the compressive load threshold value Lb or the tensile load threshold value Ld). Further, the load determiner 52 determines the pedal operation direction based on whether the detection value of the load is a positive value or a negative value.

The angle determiner 53 determines whether the angular condition is satisfied based on an output signal from the shift cam sensor SE4, the angular condition being that the detected rotation angle is larger than the angular threshold value (any one of the plurality of angular threshold values TH). Further, the angle determiner 53 determines the cam rotation direction based on the detected change of the rotation angle.

When the load condition and the angular condition are satisfied, the shift determiner 54 determines whether the pedal operation direction and the cam rotation direction correspond to each other based on the above-mentioned operation correspondence relationship. As such, when the pedal operation direction and the cam rotation direction correspond to each other, the shift determiner 54 determines that the shift operation has been performed, and determines which one of the upshift and the downshift the shift operation corresponds to. On the other hand, when the pedal operation direction and the cam rotation direction do not correspond to each other, the shift determiner 54 determines that the shift operation has not been performed.

For example, when the operation direction is the direction in which the shift pedal 210 is pushed down, and the rotation direction is the second rotation direction, the shift determiner 54 determines that the shift operation for the downshift has been performed. On the other hand, when the operation direction is the direction in which the shift pedal 210 is pushed down, and the shift rotation direction is the first rotation direction, the shift determiner 54 determines that the shift operation has not been performed.

Further, when the operation direction is the direction in which the shift pedal 210 is lifted up, and the rotation direction is the first rotation direction, the shift determiner 54 determines that the shift operation for the upshift has been performed. On the other hand, when the operation direction is the direction in which the shift pedal 210 is lifted up, and the shift rotation direction is the second rotation direction, the shift determiner 54 determines that the shift operation has not been performed.

The state determiner 55 determines the state of the engine 107 based on an output signal from the crank sensor SE2, an output signal of the throttle sensor SE3 and the driving state determination data. In the case where the shift operation has not been performed, the output controller 56 adjusts a throttle opening of the ETV 82 based on the output signal from the accelerator sensor SE1. On the other hand, in the case where the shift operation has been performed without an operation of the clutch lever 105a, the output controller 56 carries out the output adjustment of the engine 107 according to the state of the engine 107.

### [8] Control Operation in ECU 50

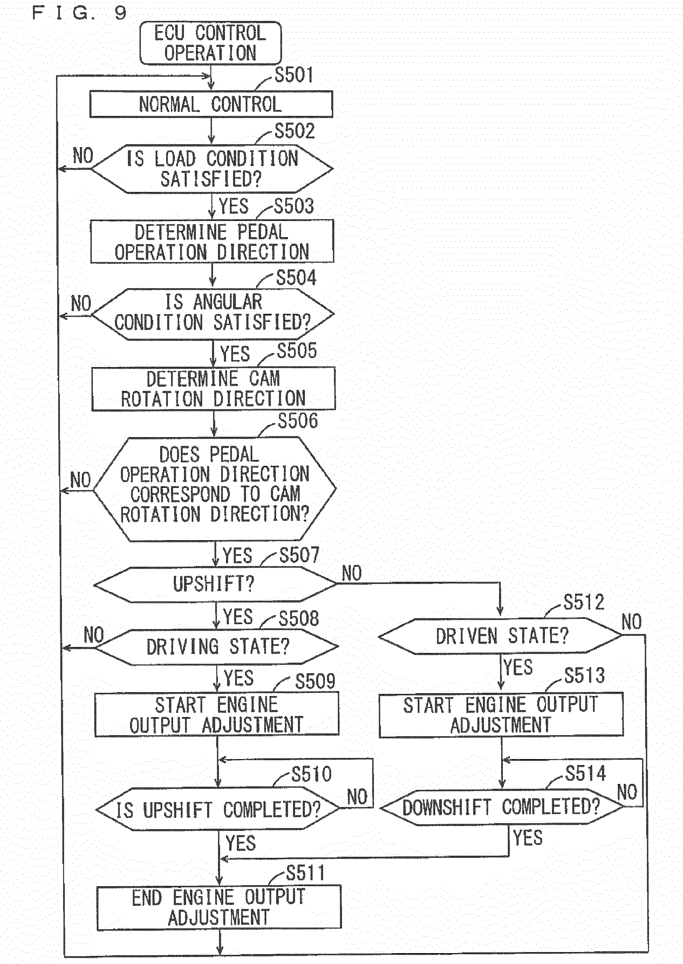

Fig. 9 is a flow chart showing one example of the control operation in the ECU 50. The control operation described below is started when the engine 107 being in a stop state is operated, and ends when the engine 107 in an operation state is stopped,

When the control operation is started, the output controller 56 adjusts the throttle opening of the ETV 82 according to the accelerator opening detected by the accelerator sensor SE1 as normal control processing (step S501). Thus, the output of the engine 107 is adjusted to the value corresponding to the accelerator opening.

Next, the load determiner 52 determines whether the load condition is satisfied (step S502). When the load condition is not satisfied, the output controller 56 returns to the process of the step S501. When the load condition is satisfied, the load determiner 52 determines the pedal operation direction (step S503).

Thereafter, the angle determiner 53 determines whether the angular condition is satisfied (step S504). When the angular condition is not satisfied, the output controller 56 returns to the process of the step S501. When the angular condition is satisfied, the angle determiner 53 determines the cam rotation direction (step S505).

Thereafter, the shift determiner 54 determines whether the pedal operation direction and the cam rotation direction correspond to each other (step S506). When the pedal operation direction and the cam rotation direction do not correspond to each other, the output controller 56 returns to the process of the step S501.

When the pedal operation direction and the cam rotation direction correspond to each other, the shift determiner 54 determines that the shift operation has been performed, and determines whether the shift operation corresponds to the upshift (step S507).

When the shift operation corresponds to the upshift, the state determiner 55 determines whether the engine 107 is in the driving state (step S508). When the engine 107 is in the driving state, the output controller 56 starts the output adjustment of the engine 107 for the upshift (step S509). In the output adjustment of the engine 107 for the upshift, the ignition of the fuel-air mixture by the ignition plug 78 is stopped, for example. Thus, the output of the engine 107 is reduced, and the torque generated in the crankshaft 2 is adjusted to be close to 0.

In the output adjustment of the step S509, the output of the engine 107 may be reduced by a reduction in throttle opening of the ETV 82 or a reduction in amount of the fuel injected by the injector 108 instead of being reduced by a stop of the ignition of the fuel-air mixture. Alternatively, the output of the engine 107 may be reduced by a change of an ignition time of the fuel-air mixture.

When the engine 107 is not in the driving state in the step S508, the output controller 56 returns to the process of the step S501. In this case, the output adjustment of the engine 107 is not carried out.

After the process of the step S509, the shift determiner 54 determines whether the upshift in the transmission 5 has completed based on an output signal of the shift cam sensor SE4 (step S510). The shift determiner 54 repeats the process of the step S510 until the upshift is completed. Thereafter, when the upshift is completed, the output controller 56 ends the output adjustment of the engine 107 (step S511), and returns to the process of the step S501.

In the step S507, when the shift operation corresponds to the downshift, the state determiner 55 determines whether the engine 107 is in the driven state (step S512). When the engine 107 is in the driven state, the output controller 56 starts the output adjustment of the engine 107 for the downshift (step S513). In the output adjustment of the engine 107 for the downshift, the throttle opening of the ETV 82 is increased, for example. Thus, the output of the engine 107 is increased, and the torque generated in the crankshaft 2 is adjusted to be close to 0.

In the output adjustment of the step S513, the output of the engine 107 may be increased by an increase in amount of the fuel injected by the injector 108 instead of being increased by an increase in throttle opening of the ETV 82. Alternatively, the output of the engine 107 may be increased by a change of an ignition time of the fuel-air mixture.

When the engine 107 is not in the driven state in the step S512, the output controller 56 returns to the process of the step S501. In this case, the output adjustment of the engine 107 is not carried out.

After the process of the step S513, the shift determiner 54 determines whether the downshift in the transmission 5 has been completed based on an output signal of the shift cam sensor SE4 (step S514). The shift determiner 54 repeats the process of the step S514 until the downshift is completed. Thereafter, when the downshift is completed, the output controller 56 proceeds to the process of the step S511, ends the output adjustment of the engine 107 and returns to the process of the step S501.

### [9] Effects of Embodiment

(a) In the above-mentioned motorcycle 100, when the shift pedal 210 is operated by the rider, determination is made whether the load condition and the angular condition are satisfied. When determination is made that the load condition and the angular condition are satisfied, determination is made that the shift operation has been performed. On the other hand, when determination is made that at least one of the load condition and the angular condition is not satisfied, determination is made that the shift operation has not been performed.
   Thus, even in the case where determination is erroneously made that the load condition is satisfied when the shift operation has not been performed, if the angular condition is not satisfied, determination is made that the shift operation has not been performed. Therefore, it is not necessary to prepare a costly load detector that has excellent noise resistance and durability and is capable of detecting a load with high accuracy in order to accurately determine whether the shift operation has been performed.
   Further, even in the case where determination is erroneously made that the angular condition is satisfied when the shift operation has not been performed, if the load condition is not satisfied, determination is made that the shift operation has not been performed. Therefore, it is not necessary to prepare a costly angle detector that has excellent noise resistance and durability and is capable of acquiring angular information with high accuracy in order to accurately determine whether the shift operation has been performed.
   As a result, it is possible to appropriately carry out the output adjustment of the engine 107 for the change of a gear ratio of the transmission 5 by accurately determining whether the shift operation intended by the rider has been performed while preventing an increase in cost.
(b) In the transmission 5, the angular threshold value TH of the shift cam 7b is set in a region other than the plurality of play angular ranges. Thus, determination is accurately made whether the angular condition is satisfied. Therefore, determination is appropriately made whether the shift operation intended by the rider has been performed.
(c) In the above-mentioned motorcycle 100, the rider can carry out the upshift of the transmission 5 by lifting up the shift pedal 210. Further, the rider can carry out the downshift of the transmission 5 by pushing down the shift pedal 210. Therefore, the rider can carry out the downshift easily by stamping on the shift pedal 210 at the time of deceleration of the motorcycle 100, for example.
(d) As described above, the absolute value of the compressive load threshold value Lb is set to be lower than the absolute value of the detection lower limit value La. Further, the absolute value of the tensile load threshold value Ld is set to be lower than the detection upper limit value Lc.
   In these cases, as compared to the case where the compressive load threshold value Lb is set to the detection lower limit value La, and the case where the tensile load threshold value Ld is set to the detection upper limit value Lc, accuracy of determination whether the detection value of the load sensor SE5 is larger than the load threshold value is enhanced.
(e) When the absolute value of the load threshold value (the compressive load threshold value Lb and the tensile load threshold value Ld) is set to be lower than the absolute value of the load required for the actual rotation of the shift cam 7b, determination may be made that the load condition is satisfied due to the operation of the shift pedal 210 not intended by the rider. Even in such a case, in the above-mentioned configuration, determination is not made that the angle condition is satisfied as long as the shift cam 7b does not rotate. Therefore, the output adjustment of the engine 107 caused by the operation of the shift pedal 210 not intended by the rider is prevented.

### [10] Other Embodiments

(a) According to the invention, steps S503, S505 and S506 are performed. However, it is not necessary for the shift determiner 54 of Fig. 8 to perform the determination process of step S507 of Fig. 9.
(b) While the angular threshold values TH of the shift cam 7b are set within the ranges other than the plurality of play angular ranges in the above-mentioned embodiment, the angular threshold value TH may be set within one play angular range out of the plurality of play angular ranges. In this case, the time length from the start of the shift operation until the determination is made that the angle condition is satisfied can be shortened. Therefore, the output adjustment of the engine 107 can be quickly started.
(c) In the above-mentioned embodiment, as for the rotation angle of the shift cam 7b,
   one angular threshold value TH is set for each set of two reference angular values RV, the two reference angular values RV corresponding to the gear positions that are consecutive in the numerical order. However, the present teaching is not limited to this. The two angular threshold values TH respectively corresponding to the upshift and the downshift may be set between the two reference angular values RV, the two reference angular values RV corresponding to the gear positions that are consecutive in the numerical order. In this case, determination can be more appropriately made whether the shift operation has been performed.
(d) In the above-mentioned embodiment, the upshift is carried out when the shift pedal 210 is lifted up, and the downshift is carried out when the shift pedal 210 is pushed down. However, the present teaching is not limited to this.
   The shift mechanism 7 may be configured such that the upshift is carried out when the shift pedal 210 is pushed down, and may be configured such that the downshift is carried out when the shift pedal 210 is lifted up. In this case, the rider can carry out the upshift easily by stamping on the shift pedal 210 when turning the motorcycle 100, for example.
(e) While a plurality of reference angular values RV corresponding to a plurality of gear positions are preset for the determination whether the angular condition is satisfied by the rotation angle of the shift cam 7b in the above-mentioned embodiment, the present teaching is not limited to this. Each of the plurality of reference angular values RV may be updated based on the detection value of the shift cam sensor SE4 every time a gear ratio of the transmission 5 is changed.
   For example, when the upshift from the (n-1) position to the n position is carried out, the reference angular value RV of the n position may be updated with the detection value of the rotation angle acquired at a time point at which the detection value of the load returns to 0 after the operation of the shift pedal 210 for the upshift. Further, when the downshift from the n position to the (n-1) position is carried out, the reference angular value RV of the (n-1) position may be updated with the detection value of the rotation angle acquired at a time point at which the detection value of the load returns to 0. In this manner, in the case where the reference angular value RV is updated, the angular threshold value TH may be reset based on the updated reference angular value RV every time the reference angular value RV is updated. Thus, whether the angular condition is satisfied can be more accurately determined.
(f) In the above-mentioned embodiment, the output adjustment of the engine 107 for the downshift is not carried out when the engine 107 is in the driving state. However, the present teaching is not limited to this.
   Even when the engine 107 is in the driving state, the output adjustment of the engine 107 may be carried out based on the shift operation for the downshift. In this case, the output adjustment of the engine 107 may be carried out when the engine 107 is not in the boundary state.
   Further, in the above-mentioned embodiment, the output adjustment of the engine 107 for the upshift is not carried out when the engine 107 is in the driven state. However, the present teaching is not limited to this. Even when the engine 107 is in the driven state, the output adjustment of the engine 107 may be carried out based on the shift operation for the upshift. In this case, the output adjustment of the engine 107 may be carried out when the engine 107 is not in the boundary state.
   When the output adjustment of the engine 107 for the downshift and the upshift can be carried out regardless of the state of the engine 107, the state determiner 55 of Fig. 8 is not required.
(g) While the load sensor SE5 is provided at the first link shaft 221 in the above-mentioned embodiment, the present teaching is not limited to this. The load sensor SE5 may be able to directly or indirectly detect the load applied by the rider to the shift pedal 210. Therefore, the load sensor SE5 may be provided at the second link shaft 222 or the shift pedal 210 instead of being provided at the first link shaft 221.
(h) While the above-mentioned preferred embodiment is an example in which the present teaching is applied to the motorcycle, the present teaching is not limited to this. The present teaching may be applied to another straddled vehicle such as a four-wheeled automobile, a motor tricycle or an ATV (All Terrain Vehicle).

### [11] Reference Embodiment

A motorcycle according to the reference embodiment has the same configuration as that of the motorcycle 100 according to the above-mentioned embodiment except for the following points.

In the motorcycle according to the reference embodiment, when the shift operation for the downshift is performed, and an engine 107 is in the driven state, an output controller 56 of an ECU 50 disconnects a clutch 3 temporarily instead of adjusting an output of the engine 107. Further, when the shift operation for the upshift is performed, and the engine 107 is in the driving state, the output controller 56 of the ECU 50 disconnects the clutch 3 temporarily instead of adjusting the output of the engine 107. In these cases, the gear ratio of the transmission 5 is smoothly changed by automatic disconnection of the clutch 3.

### [12] Correspondences between Constituent Elements in Claims and Parts in Preferred Embodiments

In the following paragraphs, examples of correspondences between various elements recited in the claims below and those described above with respect to various preferred embodiments are explained.

In the above-mentioned embodiment, the motorcycle 100 is an example of a straddled vehicle, the engine 107 is an example of an engine, the rear wheel 115 is an example of a drive wheel, the shift cam 7b is an example of a shift cam, the transmission 5 is an example of a transmission, the shift pedal 210 is an example of a shift pedal, the first link mechanism 220 is an example of a driver, and the shift shaft 250 and the second link mechanism 260 are examples of a rotation driving member.

Further, the load sensor SE5 is an example of a load detector, the shift cam sensor SE4 is an example of an angle detector, the compressive load threshold value Lb and the tensile load threshold value Ld are examples of a load threshold value, the load determiner 52 is an example of a load determiner, the angular threshold value TH is an example of an angular threshold value, the angle determiner 53 is an example of an angle determiner, the shift determiner 54 is an example of a shift determiner, and the output controller 56 is an example of a controller.

Further, the shift forks c1 to c3 are examples of one or a plurality of shift forks, the state determiner 55 is an example of first and second state determiners, and the detection lower limit value La and the detection upper limit value Lc are examples of a detection limit value.

As each of constituent elements recited in the claims, various other elements having configurations or functions described in the claims can be also used.

## Claims

1. A straddled vehicle comprising:
an engine (107);
a drive wheel (115);
a transmission (5) that has a shift cam (7b) and is configured to transmit a torque generated by the engine (107) to the drive wheel (115);
a shift pedal (210) operable by a rider for a change of a gear ratio of the transmission (5);
a driver (220) that is configured to operate when the shift pedal (210) is lifted up or pushed down by the rider;
a rotation driving member (250, 260) that is configured to rotate the shift cam (7b) in conjunction with an operation of the driver (220);
a load detector (SE5) that is provided at the driver (220) and is configured to detect a load applied to the driver (220) when the shift pedal (210) is lifted up or pushed down;
an angle detector (SE4) that is configured to detect a rotation angle of the shift cam (7b);
a load determiner (52) that is configured to determine whether a load condition is satisfied, the load condition being that the load detected by the load detector (SE5) is larger than a load threshold value (Lb, Ld);
an angle determiner (53) that is configured to determine whether an angular condition is satisfied, the angular condition being that the rotation angle detected by the angle detector (SE4) is larger than a predetermined angular threshold value (TH);
a shift determiner (54) that is configured to determine that a shift operation for a change of a gear ratio of the transmission (5) has been performed when the load condition and the angular condition are satisfied, and is configured to determine that the shift operation has not been performed when at least one of the load condition and the angular condition is not satisfied; and
a controller (56) that is configured to adjust an output of the engine (107) to change the gear ratio of the transmission (5) when the shift determiner (54) determines that the shift operation has been performed, **characterized in that**
the load determiner (52) is configured to determine a direction of operation of the shift pedal (210) based on the load detected by the load detector (SE5),
the angle determiner (53) is configured to determine a direction of rotation of the shift cam (7b) based on a change of the angle detected by the angle detector (53), and
the controller (56) is configured to not carry out the output adjustment of the engine (107) to change the gear ratio of the transmission (5) when the shift determiner (54) determines that the determined direction of operation of the shift pedal (210) and the determined direction of rotation of the shift cam (7b) do not correspond to each other.

2. The straddled vehicle according to claim 1, **characterized in that** the load determiner (52) is configured to determine that the load condition is satisfied when an output signal of the load detector (SE5) indicates that the applied load has been larger than the load threshold value (Lb, Ld) for a predetermined time length.

3. The straddled vehicle according to claim 1 or 2, **characterized in that** the transmission (5) further has one or a plurality of shift forks (c1 to c3) that are configured to move in an axis direction of the shift cam (7b) according to the rotation angle of the shift cam (7b) when the shift cam (7b) is rotated,
the gear ratio of the transmission (5) is changed by movement of at least one of the one or plurality of shift forks (c1 to c3) in the axis direction,
the shift cam (7b) is configured to have a play angle at which the one or plurality of shift forks (c1 to c3) do not move in the axis direction when the shift cam (7b) is rotated, and the angular threshold value (TH) is set to an angle other than the play angle.

4. The straddled vehicle according to any one of claims 1 to 3, **characterized in that** the shift pedal (210) is configured to be lifted up by the rider for an upshift of the transmission (5), and is configured to be pushed down by the rider for a downshift of the transmission (5), and
the driver (220) and the rotation driving member (250, 260) are configured to rotate the shift cam (7b) in a first rotation direction by an operation of the shift pedal (210) for the upshift, and are configured to rotate the shift cam (7b) in a second rotation direction opposite to the first rotation direction by an operation of the shift pedal (210) for the downshift.

5. The straddled vehicle according to any one of claims 1 to 3, **characterized in that** the shift pedal (210) is configured to be lifted up by the rider for a downshift of the transmission (5), and is configured to be pushed down by the rider for an upshift of the transmission (5), and
the driver (220) and the rotation driving member (250, 260) are configured to rotate the shift cam (7b) in a first rotation direction by an operation of the shift pedal (210) for the upshift, and are configured to rotate the shift cam (7b) in a second rotation direction opposite to the first rotation direction by an operation of the shift pedal (210) for the downshift.

6. The straddled vehicle according to claim 4 or 5, **characterized by** a first state determiner (55) that is configured to determine whether the engine (107) is in a driving state where a torque is transmitted from the engine (107) to the drive wheel (115),
the angle determiner (53) is configured to determine whether the shift cam (7b) is rotated in the first rotation direction, and
the controller (56) is configured to not carry out output adjustment of the engine (107) for a change of the gear ratio of the transmission (5) when the determination is made by the first state determiner (55) that the engine (107) is not in the driving state, and the determination is made by the angle determiner (53) that the shift cam (7b) is rotated in the first rotation direction.

7. The straddled vehicle according to any one of claims 4 to 6, **characterized by** a second state determiner (55) that is configured to determine whether the engine (107) is in a driven state where a torque is transmitted from the drive wheel (115) to the engine (107), wherein
the angle determiner (53) is configured to determine whether the shift cam (7b) is rotated in the second rotation direction, and
the controller (56) is configured to not carry out output adjustment of the engine (107) for a change of the gear ratio of the transmission (5) when the determination is made by the second state determiner (55) that the engine (107) is not in the driven state, and the determination is made by the angle determiner (53) that the shift cam (7b) is rotated in the second rotation direction.

8. The straddled vehicle according to any one of claims 1 to 7, **characterized in that** an absolute value of the load threshold value (Lb, Ld) is set to a value lower than an absolute value of a detection limit value (La, Lc) of the load detector (SE5).

## Patentansprüche

1. Ein Spreiz-Sitz-Fahrzeug, das umfasst:
einen Motor (107);
ein Antriebs-Rad (115);
ein Getriebe (5), das einen Schalt-Nocken (7b) hat, und konfiguriert ist, um ein Moment, erzeugt durch den Motor (107), zu dem Antriebs-Rad (115) zu übertragen;
ein Schalt-Pedal (210), betätigbar durch einen Fahrer, für eine Änderung eines Übersetzungs-Verhältnisses von dem Getriebe (5);
einen Treiber (220), der konfiguriert ist, zu arbeiten, wenn das Schalt-Pedal (210) durch den Fahrer angehoben oder niedergedrückt wird;
ein Dreh-Antriebs-Element (250, 260), das konfiguriert ist, um den Schalt-Nocken (7b) in Übereinstimmung mit einer Betätigung von dem Treiber (220) zu drehen;
einen Last-Detektor (SE5), der an dem Treiber (220) vorgesehen ist, und konfiguriert ist, um eine Last, aufgebracht auf den Treiber (220), zu erfassen, wenn das Schalt-Pedal (210) angehoben oder niedergedrückt ist;
einen Winkel-Detektor (SE4), der konfiguriert ist, um einen Dreh-Winkel von dem Schalt-Nocken (7b) zu erfassen;
einen Last-Bestimmer (52), der konfiguriert ist, um zu bestimmen, ob eine Last-Bedingung erfüllt ist, die Last-Bedingung ist, dass eine Last, erfasst durch den Last-Detektor (SE5), größer ist als ein Last-Grenzwert (LB, LD);
einen Winkel-Bestimmer (53), der konfiguriert ist, um zu bestimmen, ob eine Winkel-Bedingung erfüllt ist, die Winkel-Bedingung ist, dass der Dreh-Winkel, erfasst durch den Winkel-Detektor (SE4), größer ist als ein vorgegebener Winkel-Grenzwert (TH);
einen Schalt-Bestimmer (54), der konfiguriert ist, um zu bestimmen, dass eine Schalt-Betätigung für eine Änderung von dem Übersetzungs-Verhältnis von dem Getriebe (5) durchgeführt worden ist, wenn die Last-Bedingung und die Winkel-Bedingung erfüllt sind, und der konfiguriert ist um zu bestimmen, dass die Schalt-Betätigung nicht durchgeführt worden ist, wenn zumindest eine von der Last-Bedingung und der Winkel-Bedingung nicht erfüllt ist; und
eine Steuerung (56), die konfiguriert ist, um eine Abgabe von dem Motor (107) einzustellen, um das Übersetzungs-Verhältnis von dem Getriebe (5) zu ändern, wenn der Schalt-Bestimmer (54) bestimmt, dass die Schalt-Betätigung durchgeführt worden ist, **dadurch gekennzeichnet, dass** der Last-Bestimmer (52) konfiguriert ist, eine Richtung der Betätigung des Schalt-Pedals (210) auf Grundlage der Last, erfasst durch den Last-Detektor (SE5), zu bestimmen,
der Winkel-Bestimmer (53) konfiguriert ist, um eine Richtung einer Drehung von der Schalt-Nocke (7b) auf Grundlage einer Änderung von dem Winkel, erfasst, durch den Winkel-Detektor (53), zu bestimmen, und
die Steuerung (56) konfiguriert ist, die Abgabe-Einstellung von dem Motor (107) und des Übersetzungs-Verhältnis von dem Getriebe (5) zu ändern nicht auszuführen, wenn der Schalt-Bestimmer (54) bestimmt, dass die vorgegebene Richtung von der Betätigung von dem Schalt-Pedal (210) und die Bestimmungs-Richtung von einer Drehung von dem Schalt-Nocken (7b) nicht einander entsprechen.

2. Das Spreiz-Sitz-Fahrzeug gemäß Anspruch (1), **dadurch gekennzeichnet, dass** der Last-Bestimmer (52) konfiguriert ist, um zu bestimmen, dass die Last-Bedingung erfüllt ist, wenn ein Ausgangs-Signal von dem Last-Detektor (SE5) anzeigt, dass die aufgebrachte Last größer gewesen ist als der Last-Grenzwert (Lb, Ld), für eine vorgegebene Zeitlänge.

3. Das Spreiz-Sitz-Fahrzeug gemäß zu Anspruch 1 oder 2, **dadurch gekennzeichnet, dass** das Getriebe (5) weiterhin eine oder eine Mehrzahl von Schalt-Gabeln (c1 bis c3) hat, die konfiguriert sind, um sich in einer Axial-Richtung von dem Schalt-Nocken (7b), gemäß zu dem Dreh-Winkel von dem Schalt-Nocken (7b), wenn der Schalt-Nocken (7b) gedreht ist, zu bewegen,
das Übersetzungs-Verhältnis von dem Getriebe (5) durch Bewegung und zumindest einer von der einen oder Mehrzahl von Schalt-Gabeln (c1 bis c3) in die Axial-Richtung geändert ist,
der Schalt-Nocken (7b) konfiguriert ist, um einen Spiel-Winkel zu haben, indem die eine oder Mehrzahl von Schalt-Gabeln (C1 bis C3) sich nicht in der Axial-Richtung bewegen, wenn der Schalt-Nocken (7b) gedreht ist, und der Winkel-Grenzwert (TH) auf einen Winkel, anders der Spiel-Winkel, gesetzt ist.

4. Das Spreiz-Sitz-Fahrzeug gemäß zu irgendeinem der Ansprüche 1 bis 3, **dadurch gekennzeichnet, dass** das Schalt-Pedal (210) konfiguriert ist, um durch den Fahrer angehoben zu werden, für ein Hoch-Schalten von dem Getriebe (5), und konfiguriert ist, um durch den Fahrer niedergedrückt zu werden, für ein Runter-Schalten von dem Getriebe (5), und
der Treiber (220) und das Dreh-Antriebs-Element (250, 260) konfiguriert sind, um den Schalt-Nocken (7b) in eine erste Dreh-Richtung durch eine Betätigung des Schalt-Pedals (210) für das Hoch-Schalten zu drehen, und konfiguriert sind, um den Schalt-Nocken (7b) in eine zweite Dreh-Richtung, entgegen zu der ersten Dreh-Richtung, durch eine Betätigung des Schalt-Pedals (210) für das Runter-Schalten zu drehen.

5. Das Spreiz-Sitz-Fahrzeug gemäß zu irgendeinem der Ansprüche 1 bis 3, **dadurch gekennzeichnet, dass** das Schalt-Pedal (210) konfiguriert ist, um durch den Fahrer angehoben zu werden, für ein Runter-Schalten von dem Getriebe (5), und konfiguriert ist, um durch den Fahrer niedergedrückt zu werden, für ein Hoch-Schalten von dem Getriebe (5), und
der Treiber (220) und das Dreh-Antriebs-Element (250, 260) konfiguriert sind, um den Schalt-Nocken (7b) in eine erste Dreh-Richtung durch eine Betätigung des Schalt-Pedals (210) für das Hoch-Schalten zu drehen, und konfiguriert sind, um den Schalt-Nocken (7b) in eine zweite Dreh-Richtung, entgegen zu der ersten Dreh-Richtung, durch eine Betätigung des Schalt-Pedals (210) für das Runter-Schalten zu drehen.

6. Das Spreiz-Sitz-Fahrzeug gemäß Anspruch 4 oder 5, **gekennzeichnet durch** einen ersten Zustand-Bestimmer (55), der konfiguriert ist, um zu bestimmen, ob der Motor (107) in einem Antriebs-Zustand ist, in dem Moment von dem Motor (107) zu dem Antriebs-Rad (115) übertragen ist,
der Winkel-Bestimmer (53) konfiguriert ist, um zu bestimmen, ob der Schalt-Nocken (7b) in die erste Dreh-Richtung gedreht ist, und
die Steuerung (56) konfiguriert ist, eine Abgabe-Einstellung von dem Motor (107) für eine Änderung des Übersetzungs-Verhältnisses von dem Getriebe (5) nicht auszuführen, wenn die Bestimmung durch den ersten Zustand-Bestimmer (55) gemacht ist, dass der Motor (107) nicht in dem Antriebs-Zustand ist, und
die Bestimmung durch den Winkel-Bestimmer (53) gemacht ist, dass der Schalt-Nocken (7b) in die erste Dreh-Richtung gedreht ist.

7. Das Spreiz-Sitz-Fahrzeug gemäß zu irgendeinem der Ansprüche 4 bis 6, **gekennzeichnet durch** einen zweiten Zustand-Bestimmer (55), der konfiguriert ist, um zu bestimmen, ob der Motor (107) in einem angetriebenen Zustand ist, indem ein Moment von dem Antriebs-Rad (115) auf den Motor (107) übertragen ist, wobei der Winkel-Bestimmer (53) konfiguriert ist zu bestimmen, ob der Schalt-Nocken (7b) in die zweite Dreh-Richtung gedreht ist, und
die Steuerung (56) konfiguriert ist, um Abgabe-Einstellung von dem Motor (107) für eine Änderung von dem Übersetzungs-Verhältnis von dem Getriebe (5) nicht auszuführen, wenn die Bestimmung durch den zweiten Zustand-Bestimmter (55) gemacht ist, dass der Motor (107) nicht in dem angetriebenen Zustand ist, und die Bestimmung durch den Winkel-Bestimmer (53) gemacht ist, dass der Schalt-Nocken (7b) in die zweite Dreh-Richtung gedreht ist.

8. Das Spreiz-Sitz-Fahrzeug gemäß zu irgendeinem der Ansprüche 1 bis 7, **dadurch gekennzeichnet, dass** ein Absolut-Wert von dem Last-Grenzwert (Lb, Ld) auf einen Wert gesetzt ist, niedriger als ein Absolut-Wert von einem Erfassungs-Grenzwert (La, Lc) von dem Last-Detektor (SE5).

## Revendications

1. Véhicule à selle comprenant :
un moteur (107),
une roue motrice (115),
une transmission (5) qui comporte une came de changement de rapport (7b) et qui est configurée pour transmettre le couple généré par le moteur (107) à la roue motrice (115),
une pédale de changement de rapport (210) manœuvrable par un pilote en vue du changement de rapport de démultiplication de la transmission (5),
un dispositif d'entraînement (220) qui est configuré pour fonctionner lorsque la pédale de changement de rapport (210) est levée ou abaissée par le pilote,
un élément d'entraînement en rotation (250, 260) qui est configuré pour faire tourner la came de changement de rapport (7b) conjointement avec une manœuvre du dispositif d'entraînement (220),
un détecteur de charge (SE5) qui est prévu au niveau du dispositif d'entraînement (220) et qui est configuré pour détecter la charge appliquée au dispositif d'entraînement (220) lorsque la pédale de changement de rapport (210) est levée ou abaissée,
un détecteur d'angle (SE4) qui est configuré pour détecter l'angle de rotation de la came de changement de rapport (7b),
un dispositif de détermination de charge (52) qui est configuré pour déterminer si une condition de charge est satisfaite, la condition de charge étant que la charge détectée par le détecteur de charge (SE5) est plus grande qu'une valeur de seuil de charge (Lb, Ld),
un dispositif de détermination d'angle (53) qui est configuré pour déterminer si une condition d'angle est satisfaite, la condition d'angle étant que l'angle de rotation détecté par le détecteur d'angle (SE4) est plus grand qu'une valeur de seuil angulaire (TH) prédéterminée,
un dispositif de détermination de changement de rapport (54) qui est configuré pour déterminer qu'une opération de changement de rapport en vue d'un changement du rapport de démultiplication de la transmission (5) a été effectué lorsque la condition de charge et la condition angulaire ont été satisfaites, et il est configuré pour déterminer que l'opération de changement de rapport n'a pas été effectuée lorsqu'au moins l'une de la condition de charge et de la condition angulaire n'est pas satisfaite, et
un contrôleur (56) qui est configuré pour ajuster la sortie du moteur (107) pour modifier le rapport de démultiplication de la transmission (5) lorsque le dispositif de détermination de changement de rapport (54) a déterminé que l'opération de changement de rapport a été effectuée, **caractérisé en ce que** :
le dispositif de détermination de charge (52) est configuré pour déterminer le sens de manœuvre de la pédale de changement de rapport (210) sur la base de la charge détectée par le détecteur de charge (SE5),
le dispositif de détermination d'angle (53) est configuré pour déterminer le sens de rotation de la came de changement de rapport (7b) sur la base d'un changement de l'angle détecté par le détecteur d'angle (53), et
le contrôleur (56) est configuré pour ne pas exécuter l'ajustement de sortie du moteur (107) destiné à changer le rapport de démultiplication de la transmission (5) lorsque le dispositif de détermination de changement de rapport (54) a déterminé que le sens défini de manœuvre de la pédale de changement de rapport (210) et que le sens défini de rotation de la came de changement de rapport (7b) ne correspondent pas l'un à l'autre.

2. Véhicule à selle selon la revendication 1, **caractérisé en ce que** le dispositif de détermination de charge (52) est configuré pour déterminer que la condition de charge est satisfaite lorsque le signal de sortie du détecteur de charge (SE5) indique que la charge appliquée à été plus grande que la valeur de seuil de charge (Lb, Ld) pendant une durée prédéterminée.

3. Véhicule à selle selon la revendication 1 ou la revendication 2, **caractérisé en ce que** la transmission (5) comporte en outre une seule ou une pluralité de fourchettes de boîte de vitesses (c1 à c3) qui sont configurées pour se déplacer dans la direction d'axe de la came de changement de rapport (7b) en fonction de l'angle de rotation de la came de changement de rapport (7b) lorsque la came de changement de rapport (7b) est mise en rotation,
le rapport de démultiplication de la transmission (5) est changé par l'une parmi la ou les différentes fourchettes de boîte de vitesses (c1 à c3) dans la direction de l'axe,
la came de changement de rapport (7b) est configurée pour présenter un angle de jeu avec lequel ladite ou lesdites différentes fourchettes de boîte de vitesses (c1 à c3) ne se déplacent pas dans la direction de l'axe lorsque la came de changement de rapport (7b) est mise en rotation, et la valeur de seuil angulaire (TH) est réglée à un angle différent de l'angle de jeu.

4. Véhicule à selle selon l'une quelconque des revendications 1 à 3, **caractérisé en ce que** la pédale de changement de rapport (210) est configurée pour être levée par le pilote pour un passage au rapport supérieur de la transmission (5), et elle est configurée pour être abaissée par le pilote pour un passage au rapport inférieur de la transmission (5), et
le dispositif d'entraînement (220) et l'élément d'entraînement en rotation (250, 260) sont configurés pour faire tourner la came de changement de rapport (7b) dans un premier sens de rotation par une opération de la pédale de changement de rapport (210) pour le passage au rapport supérieur, et ils sont configurés pour faire tourner la came de changement de rapport (7b) dans un second sens de rotation opposé au premier sens de rotation par une opération de la pédale de changement de rapport (210) pour le passage au rapport inférieur.

5. Véhicule à selle selon l'une quelconque des revendications 1 à 3, **caractérisé en ce que** la pédale de changement de rapport (210) est configurée pour être levée par le pilote pour un passage au rapport inférieur de la transmission (5), et elle est configurée pour être abaissée par le pilote pour un passage au rapport supérieur de la transmission (5), et
le dispositif d'entraînement (220) et l'élément d'entraînement en rotation (250, 260) sont configurés pour faire tourner la came de changement de rapport (7b) dans un premier sens de rotation par une opération de la pédale de changement de rapport (210) pour le passage au rapport supérieur, et ils sont configurés pour faire tourner la came de changement de rapport (7b) dans un second sens de rotation opposé au premier sens de rotation par une opération de la pédale de changement de rapport (210) pour le passage au rapport inférieur.

6. Véhicule à selle selon la revendication 4 ou la revendication 5, **caractérisé par** un dispositif de détermination de premier état (55) qui est configuré pour déterminer si le moteur (107) est à l'état d'entraînement dans lequel un couple est transmis depuis le moteur (107) à la roue motrice (115),
le dispositif de détermination d'angle (53) est configuré pour déterminer si la came de changement de rapport (7b) est mise en rotation dans le premier sens de rotation, et
le contrôleur (56) est configuré pour ne pas exécuter l'ajustement de sortie du moteur (107) en vue d'un changement du rapport de démultiplication de la transmission (5) lorsqu'est réalisée la détermination par le dispositif de détermination de premier état (55) de ce que le moteur (107) ne se trouve pas à l'état d'entraînement, et il est réalisé la détermination par le dispositif de détermination d'angle (53) de ce que la came de changement de rapport (7b) est mise en rotation dans le premier sens de rotation.

7. Véhicule à selle selon l'une quelconque des revendications 4 à 6, **caractérisé par** un dispositif de détermination de second état (55) qui est configuré pour déterminer si le moteur (107) est à l'état entraîné dans lequel un couple est transmis depuis la roue motrice (115) jusqu'au moteur (107), dans lequel
le dispositif de détermination d'angle (53) est configuré pour déterminer si la came de changement de rapport (7b) est mise en rotation dans le second sens de rotation, et
le contrôleur (56) est configuré pour ne pas exécuter l'ajustement de sortie du moteur (107) en vue d'un changement du rapport de démultiplication de la transmission (5) lorsqu'est réalisée la détermination par le dispositif de détermination de second état (55) de ce que le moteur (107) ne se trouve pas à l'état entraîné, et il est réalisé la détermination par le dispositif de détermination d'angle (53) de ce que la came de changement de rapport (7b) est mise en rotation dans le second sens de rotation.

8. Véhicule à selle selon l'une quelconque des revendications 1 à 7, **caractérisé en ce que** la valeur absolue de la valeur de seuil de charge (Lb, Ld) est réglée à une valeur inférieure à la valeur absolue d'une valeur limite de détection (La, Lc) du détecteur de charge (SE5).
